# FASCICULE DE BREVET EUROPEEN

(11) **EP 0 616 161 B1**
(45) Date de publication et mention de la délivrance du brevet: **30.09.1998**
(21) Numéro de dépôt: 94400560.2
(22) Date de dépôt: 15.03.1994
(51) Int. Cl.: F16L 19/10, F16L 37/084

(54) **Raccord à connexion instantanée à griffe**
Hakenschnellkupplung
Hooking quick coupling

(30) Priorité: 19.03.1993 FR 9303198
(43) Date de publication de la demande: 21.09.1994
(73) Titulaire: LEGRIS S.A., F-35000 Rennes (FR)
(72) Inventeur: Combot-Courrau, Yves, F-35235 Thorigne Fouillard (FR); Le Saint, Benoît, F-35000 Rennes (FR); Musellec, Jean-Noel, F-35200 Rennes (FR); Le Quere, Philippe, F-35700 Rennes (FR)
(74) Mandataire: Robert, Jean-Pierre

(56) Documents cités:
- EP-A- 0 330 871
- DE-U- 8 536 760
- FR-A- 2 385 024
- US-A- 4 123 090

## Description

La présente invention concerne un raccord à connexion instantanée d'encombrement réduit.

Il existe de nombreux dispositifs permettant la connexion instantanée d'une tubulure à un dispositif de raccordement intermédiaire, soit entre cette tubulure et une autre tubulure, soit entre cette tubulure et un appareil d'une installation (distributeur, vérin,....), qu'il soit rapporté ou intégré dans cet appareil.

Le dispositif de raccordement comporte des moyens pour retenir de manière étanche l'extrémité de la tubulure dans un alésage destiné à accueillir cette extrémité, après que celle-ci y a été librement introduite, à l'encontre d'un effort d'extraction. En plus d'un joint d'étanchéité, ces moyens peuvent être de deux types principaux : une rondelle à denture intérieure dont les dents sont soulevées par flexion lors de l'introduction du tube et tendent à mordre le tube pour s'opposer à son extraction, et une griffe à bras sensiblement longitudinaux dont les extrémités libres possèdent des arêtes acérées tournées vers la surface extérieure du tube qui forme chacune un coin s'enfonçant dans le tube lorsqu'il est tiré pour être extrait, grâce à une surface de came prévue dans l'alésage à cet effet.

L'invention se rapporte aux raccords instantanés comportant des moyens du premier type c'est-à-dire une rondelle pourvue d'une denture intérieure.

La plupart des raccords à rondelle dentée comportent des dents flexibles attachées par leur racine à une couronne rigide qui est logée dans une gorge de l'alésage. Cette gorge est en général ménagée entre un épaulement de l'alésage et un insert, ce qui permet d'encastrer la couronne voire de la déformer et modifier l'inclinaison des dents si cette couronne n'est pas, au repos, dans un plan radial. On signalera à ce propos le document US 4,123,090 qui décrit un dispositif dans lequel la rondelle dentée comporte des dents flexibles attachées à une couronne rigide encastrée dans une gorge. Dans d'autres cas cette gorge est en totalité réalisée dans un insert prééquipé de la rondelle. Afin que l'effort résistant d'introduction du tube ne soit pas trop important, il faut aux dents une certaine souplesse pour qu'elles s'écartent facilement au passage de l'extrémité de ce tube. Cette souplesse est obtenue par des découpages et des évidements des dents mais au détriment du pouvoir mordant de celles-ci sur la surface extérieure du tube. En outre, comme les dents sont relativement souples, on constate que le tube a facilement la possibilité d'être reculé après son introduction dans le raccord. Ce recul, qui peut se produire sous une faible traction, se traduit par un déplacement de l'extrémité du tube dans la partie terminale de l'alésage où il est guidé précisément. Une diminution de la portée de guidage entraîne donc une moindre qualité au maintien du tube dans le raccord. On constate alors que le tube peut plus facilement s'ovaliser ce qui a pour conséquence une moins bonne étanchéité du raccordement, un déséquilibre des efforts transmis à la périphérie du tube par la denture, ce qui est une cause de déconnexion intempestive.

En outre, ce déplacement en direction de l'extérieur de son logement de l'extrémité du tube laisse subsister un espace entre l'épaulement d'extrémité du logement dans le corps et l'extrémité du tube qui devient un volume mort dans lequel peuvent s'accumuler des dépôts nuisibles.

Le but de la présente invention est de proposer un raccord qui remédie à ces inconvénients en mettant notamment en oeuvre une rondelle particulière.

A cet effet, l'invention a pour objet un dispositif de raccordement de tube comportant un corps pourvu d'un alésage pour recevoir l'extrémité d'un tube et des moyens de retenue du tube dans l'alésage constitués par une rondelle elastiquement déformable et sensiblement tronconique dont la circonférence intérieure est de diamètre inférieur à celui du tube et est divisée en une pluralité de dents, la partie extérieure de la rondelle étant disposée dans une gorge ménagée dans l'alésage, les dents possédant une partie de racine de faible hauteur qui, au repos, s'étend dans un plan radial et une partie active inclinée sur ce plan radial, chaque dent étant en outre reliée aux dents adjacentes par une partie périphérique de liaison. Selon l'invention, chaque partie périphérique de liaison est élastiquement déformable dans la gorge et chaque dent est individuellement indéformable sous un effort de soulèvement radial résultant de l'introduction du tube et susceptible de pivoter autour de chacune des parties périphériques de liaison qui la relient aux dents adjacentes.

Une rondelle telle que celle selon l'invention est déformable pratiquement uniquement au niveau des parties de liaison des palettes entre elles. Ces parties de liaison relient les dents par leur racine et sont très déformables élastiquement si bien que lors de l'introduction du tube, tout se passe comme si les dents étaient repoussées (déplacées) radialement sans déformation, l'ensemble de la déformation étant concentrée dans les parties de liaison selon des mouvements complexes. En outre l'effort pour "ouvrir" la rondelle est très faible. Les dents sont ainsi écartées vers l'extérieur et leur orientation est devenue beaucoup plus axiale (la variation de leur angle sur le plan radial peut être de l'ordre de 40 à 50°) si bien qu'elles constituent un "coin" extrêmement rigide et très résistant puisque travaillant essentiellement en compression entre la gorge et la rondelle qu'elles mordent. En choisissant correctement les dimensions de la gorge et de ce tube on parvient ainsi à une fixation du tube interdisant, au jeu mécanique près, tout recul de ce dernier.

Afin de disposer de la plus grande opportunité possible pour les palettes de mordre le tube, celles-ci sont de forme trapézoïdale dont la grande base est située sur le bord intérieur de la rondelle.

Dans un mode de réalisation particulier, l'angle entre la racine de la palette et la partie active est de l'ordre de 25°. En outre, on obtient une souplesse relativement intéressante lorsque le rapport entre la largeur de la partie de la liaison et la largeur totale de la rondelle dentée est de l'ordre du cinquième.

Pour permettre un débattement important de chaque palette lors de l'introduction du tube, la gorge de l'alésage qui reçoit la partie périphérique de la rondelle présente un flan aval, dans le sens d'introduction du tube, incliné.

Afin en outre de bénéficier d'un autre avantage d'une rondelle ainsi constituée, il peut être intéressant de prévoir en plus du flan incliné, un fond de gorge de largeur nettement supérieure à l'épaisseur de la rondelle pour les raisons suivantes.

S'il s'agit en effet d'un dispositif qui comporte un poussoir tubulaire monté à coulissement à l'intérieur de l'alésage entre une première position sortie inactive et une seconde position rentrée active dans laquelle les palettes de la rondelle sont écartées de leur position de repos par le nez du poussoir, selon l'invention, le nez du poussoir peut constituer dans sa position inactive une butée pour les palettes lors d'un effort d'arrachement excessif du tube, butée autour de laquelle chaque palette pivote la partie périphérique de la rondelle prenant alors appui sur le flan incliné de la gorge. Dans cette position, la partie active des dents est pratiquement radiale et pénètre au maximum dans la paroi du tube. Si l'effort d'arrachement continue à être exercé, les palettes travaillent alors en flexion entre le nez et le tube en opposant au tube une résistance à cet effort d'arrachement beaucoup plus importante que celle qu'elle lui opposait à l'origine.

Enfin, grâce à la construction de cette rondelle, il est possible de trouver des dimensions telles que cette rondelle atteigne lorsqu'elle est "retournée" par le poussoir, une seconde forme stable dans laquelle elle peut subir un arrachement complet du tube sans être détériorée. Le raccord n'étant pas détruit peut être réutilisé puisqu'une réintroduction d'un tube dans celui-ci tendra à faire passer la rondelle de cette seconde position stable à sa position repos puis à fonctionner de manière normale.

Les caractéristiques et avantages de l'invention ressortiront de la description donnée ci-après d'un mode de sa réalisation.

Il sera fait référence aux dessins annexés parmi lesquels :
- la figure 1 est une illustration générale d'un raccord conforme à l'invention,
- la figure 2 est une vue extérieure d'une rondelle mise en oeuvre dans ce raccord,
- la figure 3 est un schéma illustrant le fonctionnement de la rondelle selon l'invention,
- la figure 4 est un schéma en coupe d'un mode de réalisation du raccord selon l'invention avec un poussoir de désaccouplement du tube,
- la figure 5 est un schéma en coupe illustrant l'état du dispositif de raccordement en l'absence de tube,
- les figures 6, 7 sont des schémas illustrant le comportement de la rondelle à denture dans le dispositif selon la figure 4 lors d'un effort d'extraction excessif du tube.

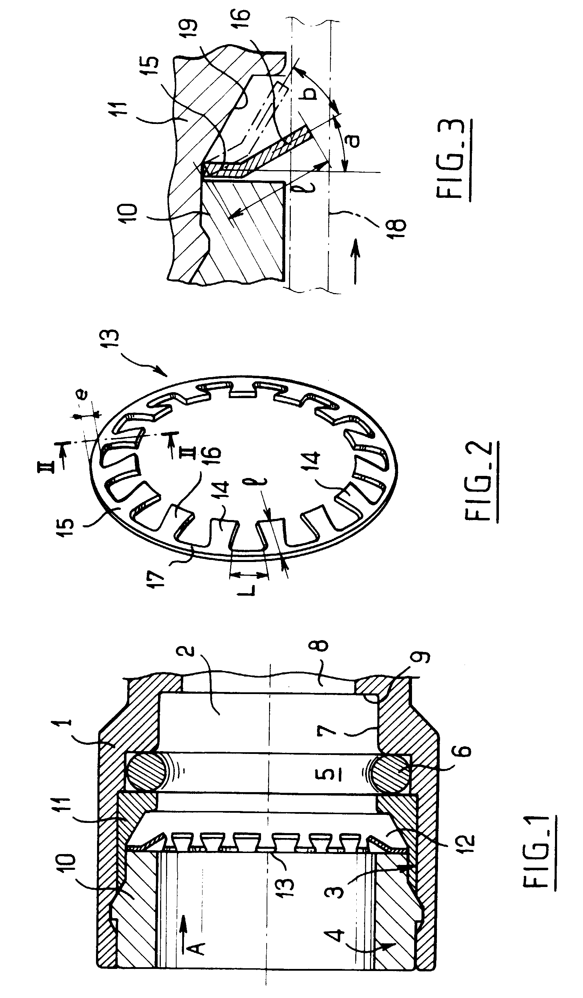

La figure 1 représente vu en coupe un dispositif de raccordement pour un tube comportant un corps 1 qui est pourvu d'un alésage 2 divisé axialement en quatre parties à savoir de gauche à droite une partie de grand diamètre 3 pour recevoir un insert 4, une partie de plus petit diamètre 5 pour recevoir un joint torique 6, une partie 7 dont le diamètre correspond sensiblement au diamètre extérieur du tube à insérer dans ce raccord et une partie 8 dont le diamètre est sensiblement égal au diamètre intérieur de ce tube. Entre les parties 7 et 8, un épaulement 9 constitue une butée à l'enfoncement du tube dans le raccord. Dans un mode particulier de réalisation, la partie 7 de l'alésage peut être légèrement conique, la petite base étant tournée vers la partie 8, pour créer une légère compression de la paroi du tube lorsqu'il pénètre dans cette partie 7.

L'insert 4 est ici représenté en deux parties 10 et 11 qui sont introduites et maintenues à force dans le corps 1 selon une technique connue, notamment si le corps 1 est en matière plastique et les inserts métalliques. Les deux parties 10 et 11 définissent entre elles une gorge 12 qui constitue un logement pour une rondelle 13 pourvue de dents d'accrochage et de retenue du tube qui sera introduit dans l'alésage 2.

La rondelle 13 est représentée en perspective à la figure 2 et partiellement en coupe à la figure 3 par exemple selon un plan II II de la figure 2. Cette rondelle comporte donc une pluralité de dents intérieures ici réalisées sous forme de palettes 14, chaque palette comportant une racine 15 s'étendant, lorsque la rondelle est au repos, dans un plan sensiblement radial, et une partie active 16 qui forme un angle a avec la racine 15. La partie active de chaque palette est sensiblement plane ou légèrement conique.

Chaque palette ou dent est relié à la palette adjacente par une partie périphérique de liaison 17 de faible section c'est-à-dire de largeur au plus égale à la largeur de la racine 15. En outre, chaque partie de liaison 17 est d'une longueur périphérique L au moins égale à la longueur l de chaque dent. Les palettes sont ainsi à leur racine écartées l'une de l'autre de manière importante pour que la partie de liaison ne soit pas trop rigide et puisse aisément encaisser des déformations de torsion. En revanche chaque palette forme un corps indéformable susceptible de pivoter d'un bloc comme on le verra en regard de la figure 3. Enfin chaque palette est de forme trapézoïdale avec une racine plus étroite que son extrémité libre de manière que la somme des longueurs des arêtes de l'extrémité libre de chaque dent et coopérant avec le tube soit suffisamment importante pour que l'agrippage de ce tube soit bien réparti autour de sa circonférence. C'est ainsi que la somme de la longueur de ces arêtes est au moins égale à la moitié de la circonférence extérieure du tube.

Dans un mode préféré de réalisation donné ci-après à titre d'exemple non limitatif, l'angle a est de l'ordre de 25° tandis que la largeur e de chaque partie de liaison 17 est au plus égale au cinquième de la largeur totale de la rondelle ou de la longueur l définie ci-dessus.

A la figure 3, on a représenté le tube 18 introduit dans l'alésage 2. La présence de ce tube a pour effet de soulever chacune des palettes qui, en tant que corps indéformable, tourne autour de chacune des parties de liaison qui la relie aux palettes adjacentes dans le fond de la gorge 12 où elle est logée. La rotation de la palette notée b dépend essentiellement de la différence entre le diamètre extérieur du tube 18 et le diamètre intérieur de la rondelle 13 au repos et dans certains exemples de réalisation, cet angle b peut atteindre 40°. Pour que ce pivotement soit possible, la gorge 12 possède un flan 19 incliné. Ce flan est situé en aval par rapport au sens A d'introduction du tube, le fond de la rainure étant dans l'exemple de la figure 3 sensiblement égal en largeur à l'épaisseur de la rondelle 13.

Dans ces conditions, lors de l'introduction du tube, il ne se produit qu'une rotation des palettes vers le haut sans translation sensible de la rondelle dans le sens d'introduction du tube. Lorsque le tube est mis en place, la rondelle affecte donc la forme représentée en traits mixtes sur la figure 3, la partie active étant alors inclinée sur l'axe du tube d'un angle d'environ 25°.

Un effort d'extraction du tube 18 dans un sens inverse à celui A de son introduction augmente l'effort sous lequel chaque palette mord dans la paroi du tube et tend à faire tourner chaque palette en direction de la position de repos de la rondelle. On notera que compte tenu de la position très inclinée de chaque palette sur l'axe du tube et de sa non-flexibilité (absence de flambage), un petit mouvement de recul du tube engendre un mouvement de pénétration de chaque palette dans le tube d'une amplitude au moins égale sinon supérieure à celle du mouvement. Cette vive pénétration de chaque palette dans le tube constitue un moyen très efficace pour empêcher le recul de ce tube.

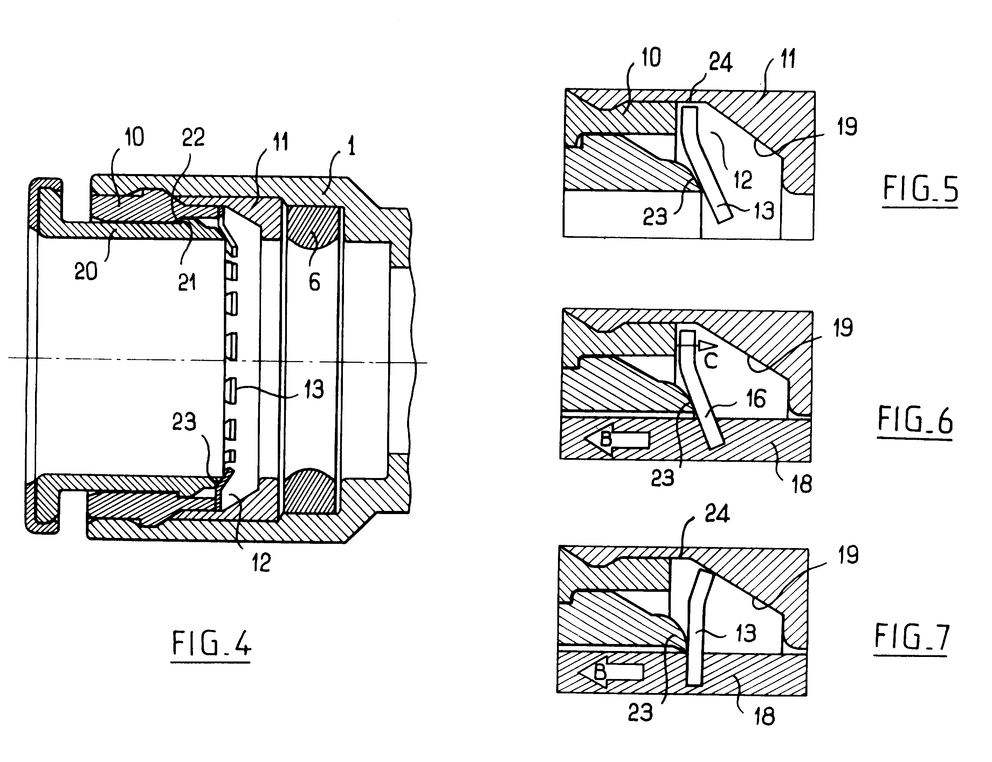

Le raccord représenté en coupe à la figure 4 comporte en plus des éléments déjà décrits en regard de la figure 1, un poussoir tubulaire 20, mobile à coulissement dans la partie 10 de l'insert entre une position sortie inactive dans laquelle il est par un épaulement 21 en butée avec un épaulement 22 de cette partie 10, la rondelle 13 étant alors simplement en appui sur le nez 23 de ce poussoir 20 et une position rentrée dans laquelle les épaulements 21, 22 sont espacés l'un de l'autre et le nez 23 soulève la totalité des palettes 16. Cette disposition est tout à fait connue dans ce type de raccord.

A la figure 5, par une vue en coupe de détail, on a représenté la rondelle 13 dans sa position de repos logée dans la gorge 12 dont le fond 24 est de largeur plus importante que l'épaisseur de la rondelle 13. On notera par ailleurs que le diamètre de la gorge 12 mesuré au niveau de son fond 24 est un peu plus important que le diamètre extérieur de la rondelle 13 si bien qu'un jeu existe entre la rondelle 13 et la gorge 12 pour les raisons décrites ci-après.

A la figure 6, on a représenté par une vue semblable à celle de la figure 5 le comportement du raccord lorsque le tube 18 est sollicité à l'extraction d'une manière excessive. On a en effet, au stade représenté à la figure 6, ramené la rondelle 13 dans sa position voisine de celle qu'elle prend au repos, chacune des palettes 16 ayant profondément mordu dans la paroi du tube 18. La continuation de cet effort d'extraction fait porter la palette 16 sur le nez 23 du poussoir 20 qui est un point fixe, (légèrement déformable) autour duquel la palette tend à basculer au-delà de la position de repos de la rondelle en entraînant la partie périphérique dans une rotation dans le sens marqué C sur la figure 6. Cette rotation est permise grâce à la souplesse en torsion des parties 17 de liaison des palettes entre elles à la périphérie de la rondelle. On constate alors que la rondelle passe brutalement de sa forme de repos à une autre forme représentée à la figure 7 dans laquelle les palettes 16 sont dans un plan sensiblement radial alors que les racines 15 sont inclinées sur ce plan. Le basculement de la rondelle de sa forme de la figure 6 à la forme de la figure 7 a été rendu possible par la présence du jeu mentionné ci-dessus. On voit que dans sa nouvelle forme, la partie périphérique de la rondelle prend appui sur le flanc incliné 19 de la gorge 12 et la poursuite de la traction du tube 18 est alors entravée par la rondelle qui ne peut plus pivoter autour du nez du poussoir puisque sa partie périphérique est en butée sur le flanc 19. La partie active 16 de chaque palette est alors sollicitée en flexion pure dont l'effort sera fonction de la nature du matériau du tube 18. A titre indicatif on notera que dans sa position de la figure 7, la rondelle peut résister à une traction comprise entre 240 et plus de 1000 newtons selon que le tube est en matière plastique ou en métal.

On aura donc remarqué que dans des conditions normales de sollicitation du tube dans le sens de son extraction du raccord, les dents ou palettes de la rondelle travaillent par résistance au flambement.

Dès que ces conditions normales sont dépassées, ces dents travaillent comme des obstacles radiaux à l'extraction et elles sont soumises à des contraintes de nature différente. Elles peuvent donc présenter des caractéristiques de résistance différentes selon que les sollicitation du tube sont normales ou excessives.

Dans le mode de réalisation permettant un changement d'état de la rondelle, la présence nécessaire d'un jeu pour que ce changement d'état puisse s'opérer, autorise un léger recul du tube cramponné par la rondelle, qui peut être limité en déterminant au plus juste le jeu de fond de gorge.

## Revendications

1. Dispositif de raccordement de tube (18) comportant un corps (1) pourvu d'un alésage (2) pour recevoir l'extrémité de ce tube et des moyens de retenue du tube dans l'alésage constitués par une rondelle (13) élastiquement déformable et sensiblement tronconique dont la circonférence intérieure est de diamètre inférieur à celui du tube et est divisé en une pluralité de dents (14), la partie extérieure de la rondelle étant disposée dans une gorge (12) ménagée dans l'alésage (2), les dents (14) possédant une partie de racine (15) de faible hauteur qui au repos s'étend dans un plan radial et une partie active (16) inclinée sur le plan radial de la racine (15), et chaque dent (14) étant reliée aux dents qui lui sont adjacentes par une partie périphérique de liaison (17), caractérisé en ce que chaque partie périphérique de liaison (17) est élastiquement déformable dans la gorge (12) et en ce que chaque dent (14) est individuellement indéformable sous un effort de soulèvement radial résultant de l'introduction du tube et susceptible de pivoter autour de chacune des parties périphériques de liaison (17) qui la relient aux dents adjacentes.

2. Dispositif selon la revendication 1, caractérisé en ce que chaque dent (14) est de forme trapézoïdale dont la grande base est située sur le bord intérieur de la rondelle (13).

3. Dispositif selon la revendication 1 ou la revendication 2, caractérisé en ce que l'angle (a) entre la racine (15) de la dent et sa partie (16) active est de l'ordre de 25°.

4. Dispositif selon l'une quelconque des revendications précédentes, caractérisé en ce que la longueur (L) de chaque partie périphérique de liaison (17) est au moins égale à la longueur (l) de chaque dent (14).

5. Dispositif selon l'une quelconque des revendica tions précédentes, caractérisé en ce que le rapport entre la largeur (e) de la partie de liaison (17) et la largeur totale de la rondelle (13) dentée est de l'ordre de 1/5ème.

6. Dispositif selon l'une quelconque des revendications précédentes, caractérisé en ce que la gorge (12) d'alésage (2) recevant la partie périphérique de la rondelle (13) présente un flan aval (19) incliné.

7. Dispositif selon la revendication 6, caractérisé en ce que le fond de la gorge (12) est de largeur plus importante que l'épaisseur de la rondelle.

8. Dispositif selon l'une quelconque des revendications 6 et 7, comportant un poussoir (20) tubulaire monté à coulissement à l'intérieur de l'alésage (2) entre une première position sortie inactive et une seconde position rentrée active, dans laquelle les dents de la rondelle sont écartées de leur position de repos par un nez (23) du poussoir, caractérisé en ce que le nez du poussoir, dans sa position inactive, constitue une butée pour les dents (14) lors d'un effort d'arrachement excessif du tube (18), autour de laquelle chaque dent pivote, la partie périphérique de la rondelle prenant alors appui sur le flan (19) incliné de la gorge (12).

9. Dispositif selon la revendication 8, caractérisé en ce qu'après pivotement, la rondelle est dans une seconde forme stable, dans laquelle la racine (15) des dents est inclinée et leur partie active (16) contenue dans un plan sensiblement radial.

## Claims

1. A coupling device for a tube (18), the device comprising a body (1) provided with a bore (2) for receiving the end of said tube and means for retaining the tube in the bore, which means are constituted by an elastically deformable washer (13) that is substantially frustoconical in shape, whose inside circumference is of a diameter smaller than the outside diameter of the tube, and which is subdivided into a plurality of teeth (14), the outside portion of the washer being disposed in a groove (12) formed in the bore (2), each tooth (14) possessing a short root portion (15) which, at rest, extends in a radial plane, and an active portion (16) that is inclined relative to the radial plane of the root (15), and each tooth (14) being connected to the teeth adjacent thereto via peripheral link portions (17) such that deformation of the washer (13) as a whole gives rise to displacement of the teeth (14) without deformation thereof, the device being characterized in that each peripheral link portion (17) is elastically deformable in the groove (12) and in that each tooth (14) is individually undeformable with respect to a raising force radially oriented resulting from the introduction of the tube and is able to pivot around each of the peripheral link portions (17) which connect it to the adjacent teeth.

2. A device according to claim 1, characterized in that each tooth (14) is trapezium-shaped, with its larger base being situated at the inside edge of the washer (13).

3. A device according to claim 1 or claim 2, characterized in that the angle (a) between the root (15) of each tooth and the active portion (16) thereof is of the order of 25°.

4. A device according to any preceding claim, characterized in that the length (L) of each peripheral link portion (17) is not less than the length (l) of each tooth (14).

5. A device according to any preceding claim, characterized in that the ratio between the width (e) of the link portions (17) and the total width of the tooth washer (13) is about one-fifth.

6. A device according to any preceding claim, characterized in that the groove (12) in the bore (2) receiving the peripheral portion of the washer (13) has a downstream flank (19) that is inclined.

7. A device according to claim 6, characterized in that the bottom of the groove (12) is of a width that is greater than the thickness of the washer.

8. A device according to claim 6 or 7, including a tubular pusher (20) slidably mounted inside the bore (2) to slide between an inactive extended first position and an active retracted second position, in which the teeth of the washer are splayed apart from their rest position by the nose (23) of the pusher, the device being characterized in that the nose of the pusher, when in its inactive position, constitutes an abutment for the teeth (14) when an excessive extraction force is applied to the tube (18), each tooth pivoting thereabout so that the peripheral portion of the washer then bears against the inclined flank (19) of the groove (12).

9. A device according to claim 8, characterized in that after pivoting, the washer is in a second stable s hape in which the root (15) of each tooth is inclined while the active portion (16) thereof lies in a plane that is substantially radial.

## Patentansprüche

1. Vorrichtung zum Anschluß eines Rohres (18), umfassend ein Gehäuse (1) mit einer Bohrung (2) zur Aufnahme des Endes dieses Rohres und Rückhaltemittel zum Festhalten des Rohres in der Bohrung, wobei die Rückhaltemittel von einer elastisch verformbaren und im wesentlichen kegelstumpfförmigen Ringscheibe (13) gebildet sind, deren Innenumfang einen gegenüber dem Durchmesser des Rohres geringeren Durchmesser hat und in eine Vielzahl von Zähnen (14) unterteilt ist, wobei der Außenabschnitt der Ringscheibe (13) in einer in der Bohrung (2) ausgebildeten Engstelle (12) angeordnet ist, wobei die Zähne (14) einen Fußabschnitt (15) geringer Höhe, der sich in der Ruhestellung in einer radialen Ebene erstreckt, und einen aktiven Abschnitt (16) haben, der gegenüber der radialen Ebene der Fußabschnitte (15) geneigt ist, und wobei jeder Zahn (14) mit den ihm benachbarten Zähnen durch einen peripheren Verbindungsabschnitt (17) verbunden ist, dadurch **gekennzeichnet,** daß jeder periphere Verbindungsabschnitt (17) in der Engstelle elastisch verformbar ist und daß jeder Zahn (14) für sich unter der Wirkung einer radialen Auslenkkraft, die vom Einführen des Rohres herrührt, nicht verformbar ist und um jeden der ihn mit den Nachbarzähnen verbindenden peripheren Verbindungsabschnitte (17) schwenken kann.

2. Vorrichtung nach Anspruch 1, dadurch **gekennzeichnet,** daß jeder Zahn (14) eine Trapezform hat, deren große Basis an dem Innenrand der Ringscheibe (13) liegt.

3. Vorrichtung nach Anspruch 1 oder 2, dadurch **gekennzeichnet,** daß der Winkel (a) zwischen dem Fußabschnitt (15) des Zahnes und seinem aktiven Abschnitt (16) ca. 25° beträgt.

4. Vorrichtung nach einem der vorangegangenen Ansprüche, dadurch **gekennzeichnet,** daß die Länge (L) jedes peripheren Verbindungsabschnittes (17) mindestens gleich der Länge (l) jedes Zahnes (14) ist.

5. Vorrichtung nach einem der vorangegangenen Ansprüche, dadurch **gekennzeichnet,** daß das Verhältnis zwischen der Breite (e) des Verbindungsabschnittes (17) und der Gesamtbreite der gezahnten Ringscheibe (13) ca. 1/5 beträgt.

6. Vorrichtung nach einem der vorangegangenen Ansprüche, dadurch **gekennzeichnet,** daß die Engstelle (12) der Bohrung (2), welche den Umfangsabschnitt der Ringscheibe (13) aufnimmt, eine stromabwärts gelegene schräge Mantelfläche (19) hat.

7. Vorrichtung nach Anspruch 6, dadurch **gekennzeichnet,** daß der Boden der Engstelle (12) eine größere Breite als die Dicke der Ringscheibe hat.

8. Vorrichtung nach Anspruch 6 oder 7, umfassend einen rohrförmigen Stößel (20), der in der Bohrung (2) zwischen einer ersten inaktiven ausgefahrenen Stellung und einer zweiten aktiven eingefahrenen Stellung verschiebbar ist, in der die Zähne der Ringscheibe aus ihrer Ruhestellung durch eine Nase (23) des Stößels ausgelenkt sind, dadurch **gekennzeichnet,** daß die Nase des Stößels in dessen inaktiver Position für die Zähne (14) bei einer auf das Rohr (18) wirkenden übermäßigen Auszugskraft einen Anschlag bildet, um den jeder Zahn schwenkt, wobei der Umfangsabschnitt der Ringscheibe dann zur Anlage an der schrägen Mantelfläche (19) der Engstelle (12) gelangt.

9. Vorrichtung nach Anspruch 8, dadurch **gekennzeichnet,** daß die Ringscheibe nach der Schwenkbewegung sich in einer zweiten stabilen Form befindet, in der der Fußbereich (15) der Zähne geneigt ist und ihr aktiver Abschnitt (16) in einer im wesentlichen radial verlaufenden Ebene liegt.
